# EUROPÄISCHE PATENTSCHRIFT

(11) **EP 3 429 756 B1**
(45) Veröffentlichungstag und Bekanntmachung des Hinweises auf die Patenterteilung: **19.02.2020**
(21) Anmeldenummer: 17713874.0
(22) Anmeldetag: 14.03.2017
(51) Int. Cl.: B05B 1/26, B05B 1/34, F24F 6/14, B05B 7/00, F24F 3/16

(54) **VORRICHTUNG ZUR LUFTBEHANDLUNG**
DEVICE FOR THE TREATMENT OF AIR
DISPOSITIF DE TRAITEMENT DE L'AIR

(30) Priorität: 14.03.2016 AT 502082016
(43) Veröffentlichungstag der Anmeldung: 23.01.2019
(73) Patentinhaber: Ecenta GmbH, 4040 Linz (AT)
(72) Erfinder: PICHLER, Josef, 4211 Alberndorf (AT)
(74) Vertreter: Hübscher & Partner Patentanwälte GmbH
(86) Internationale Anmeldenummer: PCT/AT2017/050006
(87) Internationale Veröffentlichungsnummer: WO 2017/156561

(56) Entgegenhaltungen:
- EP-A1- 0 554 591
- EP-A1- 0 590 752
- EP-A2- 0 251 196
- EP-A2- 0 367 917
- DE-A1- 4 414 598
- JP-A- 2001 056 137

## Beschreibung

Die Erfindung bezieht sich auf eine Vorrichtung zur Luftbehandlung mit einem einen Lufteinlass und einen Luftauslass aufweisenden, an einen Lüfter angeschlossenen Gehäuse, das wenigstens eine an eine Druckleitung für Wasser angeschlossene Düse und einen der Düse mit Abstand gegenüberliegenden, eine Prallplatte bildenden Prallkörper umfasst.

Um die bei Wasserfällen auftretende Ionisierung der Luft auch für eine Verbesserung beispielsweise von Raumluft nützen zu können, ist es bekannt (DE 43 38 7713 A1), innerhalb eines zylindrischen Gehäuses eine um die Gehäuseachse rotierende Druckleitung für Wasser vorzusehen, das über eine Düse beschleunigt gegen die zylindrische Gehäusewand gespritzt wird, sodass der bekannten Wirkung eines Wasserfalls vergleichbar ein Teil der Wassermoleküle in positive Wasserstoffionen und negative Hydroxylionen gespaltet wird. Während die positiven Wasserstoffionen im Wasser verbleiben und dieses basischer machen, können die negativen Hydroxylionen mit einem durch das Gehäuse geförderten Luftstrom ausgetragen werden. Ähnliche Wirkungen werden erzielt, wenn nicht der um die Gehäuseachse drehende Wasserstrahl gegen das zylindrische Gehäuse, sondern der aus einer ruhenden Düse gegen einen sich drehenden Prallkörper gespritzt wird. Nachteilig bei diesen bekannten Konstruktionen ist neben dem aufwendigen Aufbau die vergleichsweise geringe Ausbeute an Hydroxylionen.

Darüber hinaus ist es bekannt (WO 2008/003143 A1), zur gleichmäßigeren Verteilung von Sprühwasser über eine zu bewässernde Bodenfläche eine kegelförmige Prallfläche mit in konzentrischen Ringen angeordneten sphärischen Vertiefungen vorzusehen, um das aus einer Düse gegen diese Prallfläche gesprühte und von dort gegen die zu bewässernde Bodenfläche umzulenkende Sprühwasser nicht nur über diese Bodenfläche zu verteilen, sondern zusätzlich mithilfe der sphärischen Vertiefungen in kleinere Wassertröpfchen zu zerteilen.

Schließlich ist ein Luftwäscher zur Erzeugung hydroionisierter atmungsreiner Luft mit einem Gehäuse bekannt (DE 44 14 598 A1), in dem ein die zu reinigende Luft bewegender Ventilator und ein Wasser zu feinstem Nebel verarbeitender Zerstäuber angeordnet sind. Der Zerstäuber ist als auf eine Prallplatte ausgerichtete Präzisionsdüse ausgebildet, wobei der die Ionisation bewirkenden Prallplatte ein die Trennung von Positiv- und Negativionen unterstützendes Spezialfilter nachgeordnet ist.

Der Erfindung liegt somit die Aufgabe zugrunde, eine Vorrichtung zur Luftbehandlung so auszugestalten, dass mit einfachen konstruktiven Mitteln eine hohe Ausbeute an negativen Hydroxylionen sichergestellt werden kann.

Ausgehend von einer Vorrichtung der eingangs geschilderten Art löst die Erfindung die gestellte Aufgabe dadurch, dass die Prallplatte eine strukturierte Prallfläche aufweist und dass die Düse als gegenüber der Prallplatte ortsfest angeordnete Dralldüse zur Erzeugung eines um die Düsenachse drehenden Wasserstrahlkegels ausgebildet ist.

Durch die gegenüber dem Prallkörper ortsfeste Anordnung der Dralldüse wird zunächst ein wenig aufwendiger Konstruktionsaufbau erreicht, zumal der Prallkörper als Prallplatte ausgebildet ist. Trotzdem kann der Wirkungsgrad der Vorrichtung im Vergleich zum Stand der Technik erheblich gesteigert werden, weil durch den Einsatz einer Dralldüse der aus der Düse austretende, um die Düsenachse drehende Wasserstrahlkegel eine mechanische Vorbehandlung erfährt, die in Verbindung mit der beim Aufprall der Wassertropfen auf die strukturierte Prallfläche der Prallplatte wirksam werdenden Energie die Spaltung der Wassermoleküle in positive Wasserstoffionen und negative Hydroxylionen entscheidend unterstützt. Es können somit negative Hydroxylionen in einer Konzentration erzeugt werden, die die diesbezügliche Ionisierung bei Wasserfällen um ein Vielfaches übertrifft.

Damit hinsichtlich des Zerstäubungseffekts des Wassers beim Aufprall auf die Prallfläche der Prallplatte zusätzlich die Kegelform des Wasserstrahls berücksichtigt werden kann, kann die Prallplatte einen zur Düsenachse senkrechten Mittelabschnitt und einen daran anschließenden, sich gegen die Dralldüse kegelförmig erweiternden Randabschnitt aufweisen. Durch den sich kegelförmig erweiternden Randabschnitt der Prallplatte kann auch für den Randbereich des Wasserstrahlkegels ein steiler Auftreffwinkel auf die Prallfläche sichergestellt werden.

Die Strukturierung der Prallfläche hat einen nicht unerheblichen Einfluss auf die Wasserzerstäubung im Auftreffbereich auf die Prallfläche. Besonders günstige Zerstäubungsbedingungen ergeben sich in diesem Zusammenhang, wenn die Prallfläche der Prallplatte eine Oberflächenstruktur in Form von pyramidenförmigen Erhebungen aufweist, die wiederum Prallflächen bilden und damit die wirksame Prallfläche vervielfachen.

Um die mechanische Aufbereitung des Wasserstrahls in der Dralldüse vorteilhaft zu gestalten, kann die Dralldüse wenigstens zwei in Drallrichtung geneigte, in eine Düsenkammer mündende Strömungskanäle aufweisen, die sich düsenartig zu einer Austrittsöffnung verjüngt. Durch die Aufteilung des der Dralldüse zugeführten Wassers in zumindest zwei Strahlen und deren nachträgliche Vereinigung in der Düsenkammer unter einer Drallerteilung, bevor der vereinigte, drehende Wasserstrahl die Düse aus der Austrittsöffnung verlässt, ergibt sich eine für die nachfolgende Aufspaltung der Wassermoleküle vorteilhafte Energieeintragung.

Damit eine entsprechende Richtwirkung auf den aus der Dralldüse austretenden Wasserstrahl ausgeübt werden kann, empfiehlt es sich, die Austrittsöffnung der Dralldüse mit einem zylindrischen Austrittsabschnitt zu versehen. Dieser Austrittsabschnitt muss allerdings in seiner axialen Länge beschränkt werden, damit die Drallwirkung nicht verloren geht. Aus diesem Grund soll die axiale Länge des zylindrischen Austrittsabschnitts höchstens dem eineinhalbfachen Durchmesser, vorzugsweise dem Durchmesser, der Austrittsöffnung entsprechen.

In der Zeichnung ist der Erfindungsgegenstand beispielsweise dargestellt. Es zeigen
- Fig. 1: eine erfindungsgemäße Vorrichtung zur Luftbehandlung in einem schematischen Vertikalschnitt,
- Fig. 2: einen Axialschnitt durch die Dralldüse in einem größeren Maßstab und
- Fig. 3: einen Schnitt nach der Linie III-III der Fig. 2.

Die Vorrichtung nach der Erfindung weist ein Gehäuse 1 auf, das zum Teil mit Wasser 2 gefüllt ist und im Bodenbereich mit einem Sauganschluss 3 einer Pumpe 4 verbunden ist, die durch einen Motor 5 angetrieben wird. Die Druckseite der Pumpe 4 ist mit einer Druckleitung 6 verbunden, die oberhalb des Wasserspiegels an eine Dralldüse 7 angeschlossen ist. Mit Abstand oberhalb der Dralldüse 7 ist innerhalb des Gehäuses 1 eine zur Düsenachse senkrechte Prallplatte 8 vorgesehen, die eine strukturierte Prallfläche 9 aus pyramidenförmigen Erhebungen mit einer Grundfläche beispielsweise in einer Größenordnung von 1 mm² bildet. Die Prallplatte 8 selbst umfasst einen ebenen Mittelabschnitt und einen daran anschließenden Randabschnitt 11, der sich gegen die Dralldüse 7 kegelförmig erweitert.

Das Gehäuse 1 weist außerdem einen an einen Lüfter 12 angeschlossenen Lufteinlass 13 und einen Luftauslass 14 auf, über den die über den Lüfter 12 angesaugte Luft wieder in den umgebenden Raum ausgeblasen wird. Im gezeigten Ausführungsbeispiel setzt sich der Luftauslass 14 aus mehreren um die Gehäuseachse verteilten Ausblasleitungen 15 zusammen, um eine gleichmäßige Verteilung der ausgeblasenen Luft in den umgebenden Raum zu erreichen.

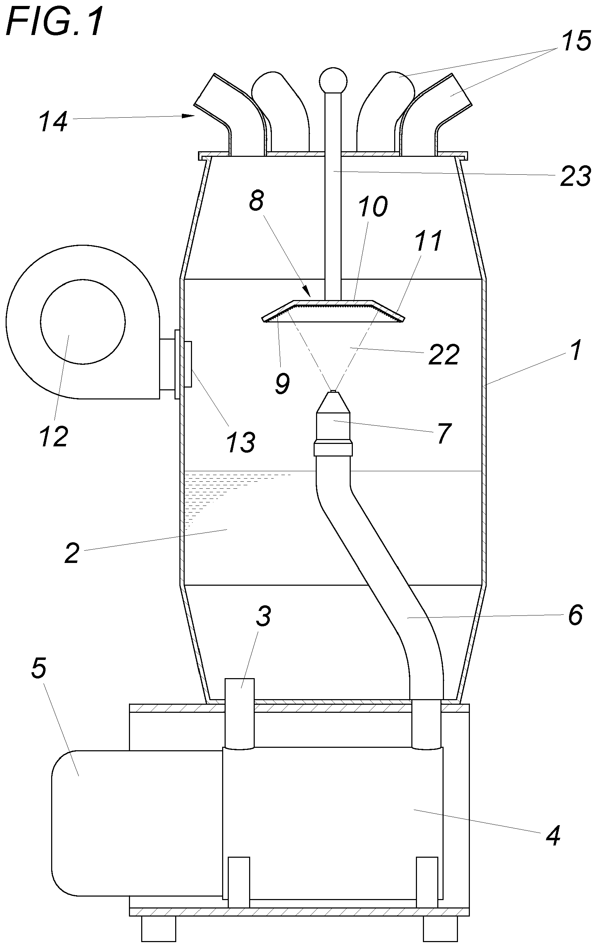

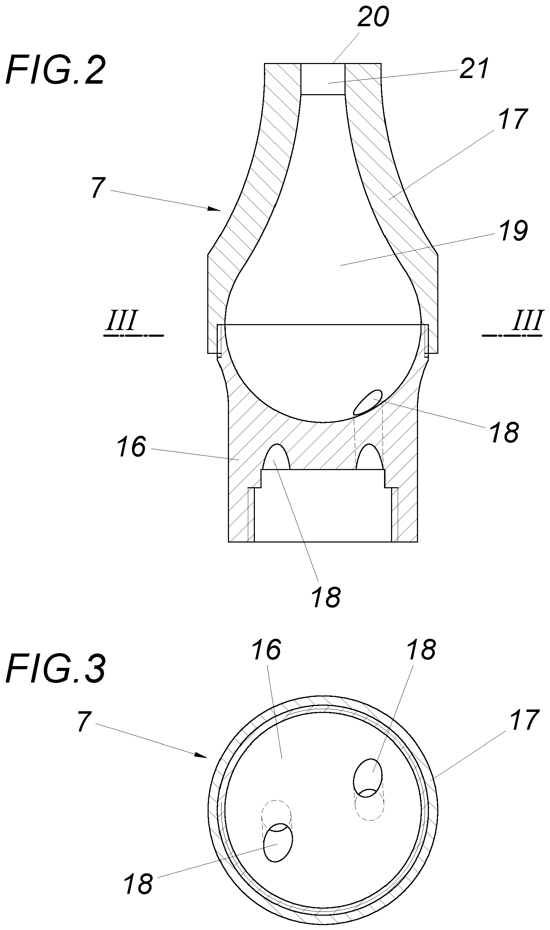

Gemäß den Fig. 2 und 3 ist die Dralldüse 7 zur einfacheren Herstellung aus zwei Teilen zusammengebaut, nämlich einem Anschlussteil 16 und einem Düsenteil 17. Im Anschlussteil 16 sind zwei in Drallrichtung geneigte Strömungskanäle 18 vorgesehen, die in einer Düsenkammer 19 zwischen den beiden Düsenteilen 16, 17 münden. Die Düsenkammer verjüngt sich düsenartig gegen eine Austrittsöffnung 20 des Düsenteils 17, wobei sich an den konischen Düsenabschnitt ein zylindrischer Düsenabschnitt 21 anschließt, dessen axiale Länge angenähert dem Durchmesser der Austrittsöffnung 20 entspricht. Aufgrund dieser Düsenausbildung wird das durch den Anschlussteil 16 unter Druck zugeführte Wasser durch die Strömungskanäle 18 unter einer Drallerteilung in die Düsenkammer gefördert und dann durch die Austrittsöffnung 20 ausgestoßen, wobei sich ein um die Düsenachse drehender Wasserstrahlkegel ausbildet, wie er in der Fig. 1 strichpunktiert angedeutet und mit 22 bezeichnet ist.

Das durch die Dralldüse 7 gegen die Prallplatte 7 in Form eines drehenden Wasserstrahlkegels 22 ausgestoßene Wasser zerstäubt an der strukturierten Prallfläche 9 der Prallplatte 8, wobei ein Teil der Wassermoleküle in positive Wasserstoffionen und in negative Hydroxylionen zerfällt, die mit dem durch das Gehäuse geförderten Luftstrom über den Luftauslass 14 ausgetragen werden. Wegen der mechanischen Vorbehandlung des Wasserstrahls in der Dralldüse 7 wird in das Wasser zusätzlich Energie eingetragen, die das Aufspalten der Wassermoleküle in Wasserstoff- und Hydroxylionen beim Aufprall auf die Prallfläche 9 unterstützt, sodass die aus dem Gehäuse 1 ausgeblasene Luft eine hohe Konzentration an negativen Hydroxylionen aufweist. Da die Zerstäubungswirkung des Wasserstrahlkegels 22 an der Prallfläche 9 von den Aufprallbedingungen und diese wiederum vom Abstand zwischen Prallplatte 8 und Dralldüse 7 abhängt, kann zur Anpassung dieser Abstand eingestellt werden. Im dargestellten Ausführungsbeispiel ist dies durch einen Stelltrieb 23 für die Prallplatte 8 angedeutet.

Vorteilhafte Arbeitsbedingungen ergeben sich z. B. beim Einsatz einer Dralldüse mit einem Durchmesser der Austrittsöffnung 20 von 6 mm, wenn das Wasser der Dralldüse 7 mit einem Druck von 5 bis 6 bar bei einem stündlichen Durchsatz zwischen 5000 l und 6000 l zugefördert wird. Der sich ausbildende Wasserstrahlkegel 22 zeigt hinsichtlich seiner Zerstäubung eine optimale Wirkung, wenn die Dralldüse 7 in einem Abstand von angenähert 12 cm von der Prallplatte 8 angeordnet ist. In dieser Entfernung beträgt der Durchmesser des Wasserstrahlkegels etwa 17 cm.

Es braucht wohl nicht hervorgehoben zu werden, dass das dargestellte Ausführungsbeispiel die Erfindung nicht einschränkt. So ist es für die angestrebte Wirkung unerheblich, ob die Dralldüse 7 nach oben, nach unten oder seitlich ausgerichtet ist, wenn nur die Prallplatte 8 senkrecht zur Düsenachse verläuft. Außerdem können selbstverständlich auch mehrere Dralldüsen 7 in einem Gehäuse 1 untergebracht werden, was sich allerdings wegen der erreichbaren hohen lonenkonzentration im Allgemeinen erübrigt.

## Patentansprüche

1. Vorrichtung zur Luftbehandlung mit einem einen Lufteinlass (13) und einen Luftauslass (14) aufweisenden, an einen Lüfter (12) angeschlossenen Gehäuse (1), das wenigstens eine an eine Druckleitung (6) für Wasser angeschlossene Düse und einen der Düse mit Abstand gegenüberliegenden, eine Prallplatte (8) bildenden Prallkörper umfasst, **dadurch gekennzeichnet, dass** die Prallplatte (8) eine strukturierte Prallfläche (9) aufweist und dass die Düse als gegenüber der Prallplatte (8) ortsfest angeordnete Dralldüse (7) zur Erzeugung eines um die Düsenachse drehenden Wasserstrahlkegels (22) ausgebildet ist.

2. Vorrichtung nach Anspruch 1, **dadurch gekennzeichnet, dass** die Prallplatte (8) einen zur Düsenachse senkrechten Mittelabschnitt (10) und einen daran anschließenden, sich gegen die Dralldüse (7) kegelförmig erweiternden Randabschnitt (11) aufweist.

3. Vorrichtung nach Anspruch 1 oder 2, **dadurch gekennzeichnet, dass** die Prallfläche (9) der Prallplatte (8) eine Oberflächenstruktur in Form von pyramidenförmigen Erhebungen aufweist.

4. Vorrichtung nach einem der Ansprüche 1 bis 3, **dadurch gekennzeichnet, dass** der Abstand zwischen der Dralldüse (7) und der Prallplatte (8) einstellbar ist.

5. Vorrichtung nach einem der Ansprüche 1 bis 4, **dadurch gekennzeichnet, dass** die Dralldüse (7) wenigstens zwei in Drallrichtung geneigte, in eine Düsenkammer (19) mündende Strömungskanäle (18) aufweist, die sich düsenartig zu einer Austrittsöffnung (20) verjüngt.

6. Vorrichtung nach Anspruch 5, **dadurch gekennzeichnet, dass** die Austrittsöffnung (20) der Dralldüse (7) einen zylindrischen Austrittsabschnitt (21) mit einer höchstens dem eineinhalbfachen Durchmesser der Austrittsöffnung (20) entsprechenden axialen Länge aufweist.

## Claims

1. Apparatus for the treatment of air, comprising a housing (1) which has an air inlet (13) and an air outlet (14), is connected to a fan (12) and comprises at least one nozzle connected to a pressure line (6) for water and a deflector body lying opposite the nozzle at a spaced interval and forming a deflector plate (8), **characterised in that** the deflector plate (8) has a structured deflector surface (9) and **in that** the nozzle is designed as a swirl nozzle (7) which is arranged in a positionally fixed manner with respect to the deflector plate (8) in order to generate a water jet cone (22) rotating about the nozzle axis.

2. Apparatus as claimed in claim 1, **characterised in that** the deflector plate (8) has a central portion (10) which is perpendicular to the nozzle axis, and has an edge portion (11) which adjoins thereto and extends conically towards the swirl nozzle (7).

3. Apparatus as claimed in claim 1 or 2, **characterised in that** the deflector surface (9) of the deflector plate (8) has a surface structure in the form of pyramid-shaped elevations.

4. Apparatus as claimed in any one of claims 1 to 3, **characterised in that** the spaced interval between the swirl nozzle (7) and the deflector plate (8) can be adjusted.

5. Apparatus as claimed in any one of claims 1 to 4, **characterised in that** the swirl nozzle (7) has at least two flow channels (18) which are inclined in the swirl direction, issue into a nozzle chamber (19) and taper in the manner of a nozzle to an outlet opening (20).

6. Apparatus as claimed in claim 5, **characterised in that** the outlet opening (20) of the swirl nozzle (7) has a cylindrical outlet portion (21) having an axial length corresponding at most to one and a half times the diameter of the outlet opening (20).

## Revendications

1. Dispositif de traitement de l'air doté d'un boîtier (1) présentant une entrée d'air (13) et une sortie d'air (14) et raccordé à un ventilateur (12) qui comporte au moins une buse raccordée à une conduite sous pression (6) pour l'eau et un corps déflecteur opposé à la buse et situé à distance de celle-ci et formant une plaque déflectrice (8), **caractérisé en ce que** la plaque déflectrice (8) présente une surface déflectrice (9) structurée et que la buse se présente sous la forme d'une buse à tourbillon (7) fixe disposée face à la plaque déflectrice (8) pour générer un jet d'eau conique (22) tournant autour de l'axe de la buse.

2. Dispositif selon la revendication 1, **caractérisé en ce que** la plaque déflectrice (8) présente une partie centrale (10) perpendiculaire à l'axe de la buse et une partie périphérique (11) raccordée à celle-ci s'évasant en forme de cône opposé à la buse à tourbillon (7).

3. Dispositif selon la revendication 1 ou 2, **caractérisé en ce que** la surface déflectrice (9) de la plaque déflectrice (8) présente une structure superficielle constituée de bosses pyramidales.

4. Dispositif selon une des revendications 1 à 3, **caractérisé en ce que** la distance entre la buse à tourbillon (7) et la plaque déflectrice (8) est réglable.

5. Dispositif selon une des revendications 1 à 4, **caractérisé en ce que** la buse à tourbillon (7) présente au moins deux canaux d'écoulement (18) inclinés dans le sens de la giration et débouchant dans une chambre de buse (19) qui s'effile en forme de buse jusqu'à un orifice de sortie (20).

6. Dispositif selon la revendication 5, **caractérisé en ce que** l'orifice de sortie (20) de la buse à tourbillon (7) présente une section de sortie cylindrique (21) dont la longueur axiale correspond au maximum à une fois et demie le diamètre de l'orifice de sortie (20).
